# EUROPEAN PATENT SPECIFICATION

(11) **EP 3 588 140 B1**
(45) Date of publication and mention of the grant of the patent: **08.09.2021**
(21) Application number: 18180420.4
(22) Date of filing: 28.06.2018
(51) Int. Cl.: G01S 17/89, G01S 7/491, G01S 7/481

(54) **A VISION SYSTEM AND VISION METHOD FOR A VEHICLE**
SICHTSYSTEM UND SICHTVERFAHREN FÜR EIN FAHRZEUG
SYSTÈME ET PROCÉDÉ DE VISION POUR VÉHICULE

(43) Date of publication of application: 01.01.2020
(73) Proprietor: Veoneer Sweden AB, 447 83 Vårgårda (SE); Beamagine S.L., 08755 Castellbisbal (ES)
(72) Inventor: KÄLLHAMMER, Jan-Erik, 58246 Linköping (SE); RIU, Jordi, 08660 Balsareny (ES); RODRIGO, Noel, 25005 Lleida (ES); SANABRIA, Ferran, 08912 Badalona (ES); ROYO, Santiago, 08755 Castellbisbal (ES)
(74) Representative: Müller Verweyen

(56) References cited:
- WO-A1-2013/046107
- WO-A1-2014/125153
- WO-A1-2016/191367
- WO-A1-2018/091970
- US-A1- 2017 357 000
- US-A1- 2018 100 929

## Description

The invention relates to a vision system for a motor vehicle comprising a light beam generation part adapted to generate at least one light beam directed to a scanned surface in the environment of the vehicle; at least one light deflection device comprising an array of light deflection elements, wherein the orientation of each light deflection element is switchable between at least a first orientation and a second orientation, to redirect light which is incident on said light deflection element from the scanned surface in at least a first deflection direction corresponding to the first orientation or a second deflection direction corresponding to the second orientation; a plurality of light sensing devices adapted to sense light beam portions which are redirected from the at least one light deflection device in said first and/or second deflection direction and incident on light sensitive surfaces of said light sensing devices; a plurality of lens systems adapted to focus different reflected light beams from the scanned surface to the light deflection device, wherein the first lens system is arranged to observe a first portion of the scanned surface and the second lens system is arranged to observe a second portion of the scanned surface that differs from the first scanned surface portion; and a data processing device. The invention also relates to a corresponding vision method.

Similar vision systems are generally known, for example from WO 2012 123809 A1 and WO 2014 125153 A1. Herein, a surface is illuminated by a light beam that originates from a light source and is reflected by the surface. The reflected light beam is incident on a lens arrangement transmitting the light beam towards the light deflection device where it is deflected in a specific manner to either a light sensing device or to an absorber. The time-of-flight of the light beam is indicative of the distance between the system and a point on the surface, which spatial location is derivable from information on the light deflection device and by the time-of-flight.

The field of view of such systems, which usually refers to the opening angle, is limited by the optical properties of the lens arrangement, its geometry, optical axis, and the size of the entrance pupil, through which the light enters the system. Due to imaging aberrations, a large field of view typically requires a small entrance pupil and at the same time the area of the entrance pupil is proportional to the light gathering capabilities of the system. However, the amount of light passing through the entrance pupil and the lens arrangement is crucial for the light sensing capabilities of the sensing device. Thus, the size of the entrance pupil of the lens arrangement needs to balance the requirements of the field of view and sufficient light transmission.

A large field of view is favorable but leads to low light sensing capabilities and requires larger power of the light source to emit a high intensity light beam. This leads to difficulties with power consumption, cooling, cost, durability, and eye safety constraints. A small field of view is typically not favorable.

WO 2018/091970 A1 and US 2017/0357000 A1 each disclose a vision system for a motor vehicle comprising a light beam generation part, a light deflection device, a plurality of light sensing devices, a lens system adapted to focus reflected light beams from the scanned surface to the light deflection device, and a data processing device.

The problem underlying the invention is to improve the field of view and the light sensing capabilities of the vision system and method.

The invention solves this problem with the features of the independent claims. The system according to the present invention suggests that the number of light deflection devices is smaller than the number of light sensing devices; each of the first lens system and the second lens system is arranged to focus a corresponding reflected light beam from the scanned surface to the light deflection device; and wherein due to the different angles of incidence of the reflected light beams along said first optical axis and said second optical axis on the light deflection device, the light beams incident on the same light deflection device are directed to different light sensing devices.

According to the invention, it is suggested that light from at least one light beam is directed to different light sensing devices using the same single light deflection device. At least two light beams travelling on different optical paths and at least two different detector paths directing light from the lens systems towards the light sensing devices, but a smaller number of light deflection devices, for example only one light deflection device, to direct light on the at least two light sensing devices are provided. At least two light pulses can for example be travelling along different optical paths. The number of detector paths preferably equals the number of light sensing devices. The invention makes the vision system more compact and lightweight and uses less deflection devices than light sensing devices which is cost-effective, since the light deflection device is typically the second most expensive component in the vision system.

The first scanned surface portion observed by the first lens system and the second scanned surface portion observed by the second lens system can be non-overlapping, partially overlapping or fully overlapping. Therefore, the first scanned surface portion and the second scanned surface portion are different from each other by not being identical to each other. No other restriction is implied in the first scanned surface portion and the second scanned surface portion being different from each other.

The advantageous common focus of the first lens system and the second lens system on the light deflection device allows the improvement of the field of view, the scanned surface portions and the light sensing capabilities by imaging non-overlapping, or at least partially overlapping, scanned surface portions, and/or different fields of view defined by the lens systems or the use of complementary imaging modes, such as for example a combination of polarimetric, RGB, multispectral and/or time of flight images with a different mode in each of the light sensing devices.

The first and the second lens system are preferably arranged such that their optical axes enclose different angles with the light deflection device to allow light travelling along different deflection directions. This supports the use of multiple light sensing devices but less light deflection devices. Light beams that are transmitted via the first lens system enclose an angle of incidence with the light deflection device that preferably differs from the angle of incidence that is enclosed by light beams that are transmitted via the second lens system and the light deflection device. Thus, the first deflection direction depends on the angle of incidence which is defined by the optical axes of the lens systems.

Preferably, the first light sensing device is exposed to light transmitted through the first lens system, and the second light sensing device is exposed to light transmitted through the second lens system. In this manner, data transmitted through the first lens system is mapped to the first light sensing device and data transmitted through the second lens system is mapped to the second light sensing device. In this embodiment the different fields of view of the first lens system and the second lens system can be monitored by the respective light sensing devices, including the possibility of them to be coincident to image the same field of view under different imaging modes.

In a preferred embodiment, the first light sensing device is protected from light transmitted through the second lens system, and the second light sensing device is protected from light transmitted through the first lens system. This is done to ensure that the first light sensing device is not disturbed by light that is transmitted through the second lens system and the second light sensing device is not disturbed by light that is transmitted through the first lens system. The protection can be achieved by an appropriate arrangement of the first lens system, the second lens system, the light deflection device and/or the light sensing devices. The protection can comprise optical shielding, e.g., by a separation of the detector paths and/or optical filters and/or beam splitters of different types.

Advantageously, each of the light sensing devices is exposed to light transmitted through one of the lens systems, only. This ensures a one-to-one correspondence between the field of view and/or the scanned surface portion of the first lens system and the first light sensing device, and the second lens system and the second light sensing device.

In a preferred embodiment, the first lens system, the light deflection device, and the first light sensing device form a first depth imaging system, and the second lens system, the light deflection device, and the second light sensing device form a second depth imaging system different from the first depth imaging system, to allow complementary depth imaging. The depth imaging can in particular be LIDAR imaging based on run-time/time-of-flight measurements of the emitted light pulses or beams. In this embodiment the vision system comprises two different LIDAR systems using a common light deflection device.

Preferably, the normal of the light sensitive surface of the first light sensing device is different from the normal of the light sensitive surface of the second light sensing device. This ensures an optimal exposure of the light sensitive surfaces with respect to the first deflection directions which are preferably perpendicular to the light sensitive surfaces. The differently inclined light sensitive surfaces of the light sensing devices allow mounting the first light sensing device and the second light sensing device on different printed circuit boards, substrates and/or wafers and thereby an independent arrangement of the light sensing devices.

In a preferred embodiment, the first optical axis of the first lens system and the second optical axis of the second lens system intersect at the light deflection device to ensure focusing of the reflected light beams on the deflection device.

Advantageously, the number of light deflection devices is one to enable a particularly effective embodiment. With one light deflection device, the number of light sensing devices can equal the number of lens systems and/or the number of different optical paths travelled by the plurality of light beams emitted into the environment.

Preferably, the different scanned surface portions observed by the lens systems comprise complementary and/or at least partially overlapping regions to scan the field of view in a preferred manner. In one embodiment, the lens systems have two identical fields of view with optical axes that differ from each other. Two lens systems with an identical field of view of for example 60° in the horizontal each could be configured to be non-overlapping, i.e., complementary. This would yield a total field of view of for example 120°. In case of partially overlapping fields of view, the total field of view would be between 60° and 120°. In a further embodiment, two different lens systems with different fields of view, of for example 30° and 100°, could be overlapping whereby the narrow field of view can provide longer range due to the larger optical aperture than a narrower lens system allows. In this embodiment, the total field of view is 100° with a higher range in the section covered by the 30° lens. The two lens systems in this embodiment may be fully overlapping, partially overlapping, or non-overlapping. A preferred embodiment would be fully overlapping, whereby the 30° field of view lens system covers a central region of the overview provided by the wide 100° field of view lens system. In this embodiment, there will be different fields of view but possibly the same optical axis.

In one embodiment, the light beam generation part is adapted to emit a plurality of light beams into at least two different regions of the vehicle environment, and each of the lens systems is arranged to focus a reflected light beam corresponding to the reflection on the surface of any one of the plurality of light beams to the light deflection device to enable an effective partition of the scanned surface and/or of the overall field of view. For example, a first light beam could be emitted to scan the first scanned surface portion and a second light beam could be emitted to scan the second scanned surface portion. The number of light beams can be larger than two, and preferably coincides with the number of light sensing devices. The different regions can comprise complementary, overlapping, and/or coinciding sections.

Preferably, any one of the lens systems is arranged to focus a reflected light beam corresponding to the reflection on the surface of one light beam, only, to the light deflection device. This ensures a one-to-one correspondence of emitted light beams and reflected light beams that are to be detected by the light sensing devices.

In a preferred embodiment, at least two of the plurality of light beams are generated by a common light source to enable a simple and cost-effective time-of-flight measurement. In this embodiment, the light generation part can comprise the light source and at least one beam splitter adapted to split a light beam emitted from the light source into a plurality of light beams.

Each receiver path may be divided into multiple receivers to gain larger optical aperture and hence longer range for a given emitted laser power.

In a preferred embodiment, the light beam generation part is adapted to emit one light beam into the environment to cover the whole field of view of the vision system. The field of view of the vision system can be defined by the directions in which the light beams can be directed and/or by the field of view as defined by any of the lens systems. This embodiment allows that a single light beam illuminates the full field of view and/or scanned surface under test which is observed through separate optical systems or lens systems, or through separate receiving units.

In the following the invention shall be illustrated on the basis of preferred embodiments with reference to the accompanying drawings, wherein:
- Fig. 1: shows a schematic view of a vision system;
- Figs. 2, 3: show embodiments of an optical unit of the vision system;
- Figs. 4-6: schematically show the arrangement of a light deflection device, two light sensing devices, and a lens arrangement; and
- Fig. 7: shows a schematic view of an embodiment of a vision system with two emitted light beams.

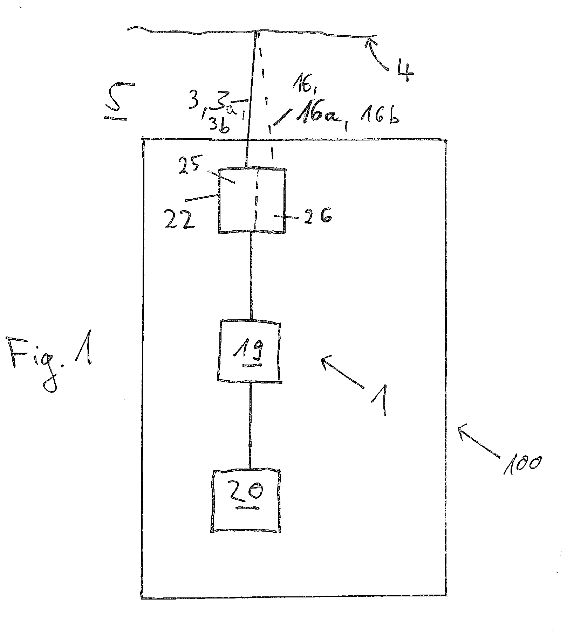

According to Figure 1, the vision system 1 is mounted in or on a vehicle 100 to capture images of a scanned surface 4 in the environment 5 of the vehicle 100. The vision system 1 comprises an optical unit 22 having a light emitting unit 25 and a light receiving unit 26, and a data processing device 19. The vision system 1 can further include other detection systems and/or sensors such as radar or other cameras.

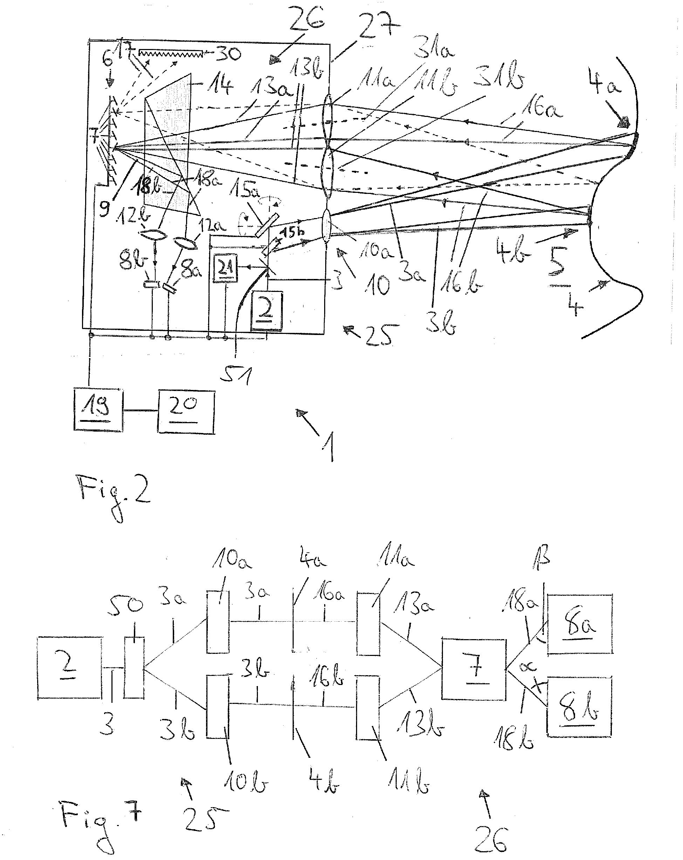

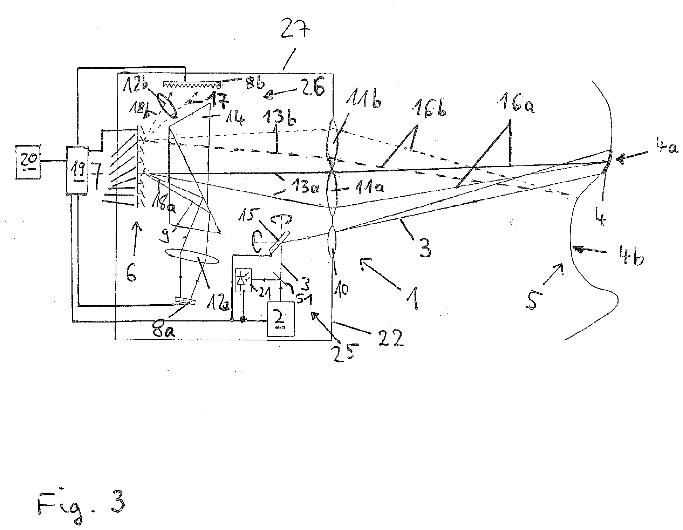

The light emitting unit 25 comprises a light generation part that is adapted to emit a light beam 3 (Figure 3) which is preferably directed through a lens arrangement 10 towards the environment 5 of the vehicle 100, or (Figure 2) a first light beam 3a, which is preferably directed through a first lens arrangement 10a towards the environment 5 of the vehicle 100, and a second light beam 3b, which is, as schematically shown in Figure 7, preferably directed through a second lens arrangement 10b towards the environment 5 of the vehicle 100. As shown in Figures 1-3, the light beams 3, 3a, 3b eventually interact with the environment 5, in particular the scanned surface 4 or dust, snow, rain, and/or fog in the environment 5. The light beams 3, 3a, 3b are reflected and a reflected first light beam 16a of the first light beam 3a and a reflected second light beam 16b of the second light beam 3b enter the optical unit 22, more particular the receiving unit 26 thereof. In the case of a single light beam 3, there is only one reflected light beam 16 at each time, which is either captured through a first lens system 11a (then the light beam 16 is designated 16a) or a second lens system 11b (then the light beam 16 is designated 16b). The light entering the optical unit 22 is preferably recorded by the optical unit 22 and the recorded image data is processed by the data processing device 19.

The driver assistance device 20 is able to trigger defined driver assistance action to assist the driver, e.g. braking, acceleration, steering, showing information, based on the data provided by the data processing device 19.

In the embodiment shown in Figure 1, the vision system 1 comprises a single optical unit 22 mounted for example in the front part of a vehicle 1 and directed for example towards the front of the vehicle 1. Other positions in/on the vehicle are also possible, for example mounted at and/or directed towards the rear, the left, and/or the right. The vision system 1 can also comprise a plurality of optical units 22, emitting units 25, and/or receiving units 26 that are mounted and/or directed for example towards the rear, the left, and/or the right.

The viewing direction of the optical unit 22, emitting unit 25 and/or the receiving unit 26 is preferably variable. A plurality of optical units 22, emitting units 25, and/or receiving units 26 allows covering a wide overall field of view, even up to 360° around the vehicle 100. A plurality of optical units 22, emitting units 25, and/or receiving units 26 could communicate with separate data processing devices 19, communicate with a single data processing device 19, or work with a master-slave configuration. In particular, the images recorded from the environment 5 could be used for physical calibration of the plurality of the optical units 22, emitting units 25, and/or receiving units 26 to cover a large field of view.

Figure 2 shows an embodiment of the vision system 1 in more detail. The light generation part 2 is arranged in the light emitting unit 25 and comprises preferably a light source 2. The light source 2 preferably comprises a laser, including laser diodes, fiber lasers, etc., such that the vision system 1 is a LIDAR system. Other embodiments of the light source 2 are possible, e.g. LEDs, or polarized light sources of different wavebands, adapted to correspond with the recording capabilities of light sensing devices 8a, 8b comprised in the optical unit 22 and/or in the receiving unit 26.

In the present embodiment, the light generation part 2 comprises a beam splitter 15b for example a semi-transparent mirror, adapted to split the single light beam 3 from the light source 2 into the first light beam 3a and the second light beam 3b. In the present embodiment, the beam splitter is formed by the second scanning device 15b, which is explained later. The beam splitter may be independent from any scanning device 15a, 15b in other embodiments. For example, the light beam 3 from the light source 2 could be split by a separate beam splitter into first and second light beams 3a, 3b, before the first light beam 3a is directed on a first scanning device 15a and the second light beam 3b is directed on a second scanning device 15b. In a still further embodiment, at least two light beams 3a, 3b could be directed at a single scanning device 15 (see Figure 3) under different angles, such that the light beams outgoing from the scanning device 15 are also directed out in different angles.

The use of the light source 2, a plurality of light sources, and/or a beam splitter 15b determines the sensing and detection capabilities of the vision system 1 and preferably provides multi-specular methods, improvement of the sensitivity of retro-reflected beams, and/or road friction estimations.

In the embodiment of Figure 2, a separate scanning device 15a, 15b can be provided for each light beam 3a, 3b to scan the full field of view of the emitting unit 25. The light generation part 2 is adapted to generate a plurality of light beams 3a, 3b comprising a first light beam 3a and a second light beam 3b with different directions and directed to a scanned surface 4 in the environment 5 of the vehicle. Here, the light beams 3a, 3b are directed to different regions and adjacent regions are preferably scanned by the light beams 3a, 3b in order to get a composed image in one single imaging mode used by the light sensing devices 8a, 8b. It is also possible to direct light beams 3a, 3b to the same direction, if different imaging modes are used in the light sensing devices 8a, 8b, or to use a single scanning device 15 which covers the full field of view which is then imaged separately onto the light sensing devices 8a, 8b, as will be described later with respect to Figure 3. The light source 2 preferably generates pulsed laser light with a specific wavelength to feed the beam splitter 15b to split the incoming light and generate the plurality of light beams 3a, 3b.

A small portion of the light beam 3 (Figure 3) and/or any of the light beams 3a, 3b is preferably divided or split by a beam splitter 51 and directed towards a trigger device 21 comprised in the emitting unit 25 to allow an accurate time-of-flight estimation. The trigger device 21 is preferably in communication with the data processing device 19 to start and/or synchronize the time-of-flight measurement in order to realize a LIDAR system and to allow depth imaging. The light beams 3a, 3b (Figure 2), or the light beam 3 (Figure 3) can in some embodiments be widened by suited optical components, e.g., a first lens arrangement 10a (Figure 2), or a lens arrangement 10 (Figure 3), which may defocus, and thereby widen, any of the light beams 3, 3a, 3b, towards the scanned surface 4. The first lens arrangement 10a may be different for different light beams 3a, 3b, for example depending on their optical properties, such as intensity, wavelength and/or polarization.

Each light beam 3a, 3b can in the embodiment of Figure 2 be redirected by a corresponding scanning device 15a, 15b comprised in the emitting unit 25, for example a mirror rotatable around at least one axis.

The at least one scanning device 15, 15a, 15b like a mirror, a group of mirrors, a prism arrangement such as Risley prisms, and/or other optical component and/or a group thereof, is adapted to be controllable by and in communication with the data processing device 19. The scanning device 15, 15a, 15b, which may in particular be a MEMS device, is preferably adapted to be rotatable around at least two axes, allowing scanning of the environment 5 of the vehicle 100. For example, a horizontal scanning device could be arranged to perform the rotation around a first axis and a vertical scanning device could be arranged to perform a rotation around a second axis. By means of the at least one scanning device 15, 15a, 15b, at least one light beam 3, 3a, 3b can be directed sequentially towards points or spots on the scanned surface 4.

Preferably, the first light beam 3a is directed to a first scanned surface portion 4a of the scanned surface 4 that is complementary, or at least partially overlapping, to the second scanned surface portion 4b whereto the second light beam 3b is directed. The first light beam 3a is reflected on and/or scattered by the first scanned surface portion 4a or by other reflectors and/or scatterers in the environment 5, such as rain, fog, dust or snow, and a reflected first light beam 16a of the first light beam 3a is reflected and enters the optical unit 22 and/or the receiving unit 26, e.g., by passing a first lens system 11a, alternatively an entrance window. The second light beam 3b is reflected on the second scanned surface portion 4b or by other reflectors and/or scatterers in the environment 5, and a reflected second light beam portion 16b of the second light beam 3b is reflected and enters the optical unit 22 and/or the receiving unit 26, e.g., by passing a second lens system 11b, alternatively an entrance window. The first scanned surface portion 4a is preferably complementary, at least partially, to the second scanned surface portion 4b. I.e., the scanned surface portions 4a, 4b comprise non-overlapping portions of the scanned surface 4 in order to enable scanning of an overall field of view that is composed of fields of view as defined by the scanned surface portions 4a, 4b.

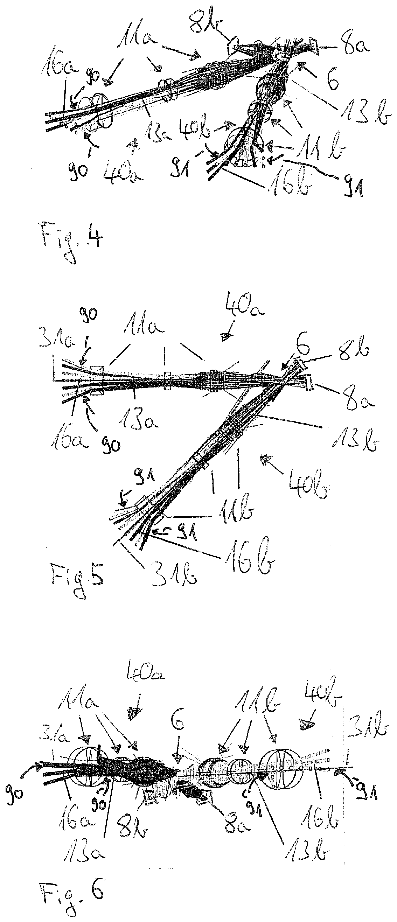

The first lens system 11a has a first field of view 90 to scan the first portion 4a. The second lens system 11b has a second field of view 91 that potentially differs from the first field of view 90 of the first lens system 11a to scan the second portion 4b that differs from the first scanned surface portion 4a (see also Figures 4 to 6 for fields of view 90, 91). The lens systems 11a, 11b can be arranged so that the fields of view 90, 91 overlap at least partially and/or are disjoint and/or so that the scanned surface portions 4a, 4b coincide, overlap, overlap at least partially or are non-overlapping.

Overlapping scanned surface portions 4a, 4b of lens systems 11a, 11b can have potential benefits as follows. The detection range can be increased by using one field of view 90, 91 narrower than the other the field of view 90, 91. The range can be increased by having at least two laser light beams 3a, 3b illuminating the same location in the overlap region of the scanned surface portions 4a, 4b and thereby by providing more optical power at the specific location. The resolution can be increased using one field of view 90, 91 narrower than the other the field of view 90, 91 that allows subsampling of each illuminated spot.

In one embodiment the scanned surface portions 4a, 4b overlap so that the first portion 4a is entirely located within the second portion 4b. I.e. the second field of view 91 is larger and/or wider than the first field of view 90 and/or the second portion 4b overlaps the first portion 4a.

The lens systems 11a, 11b can be configured to have different fields of view 90, 91 and/or partially or fully overlapping detection areas, i.e., scanned surface potions 4a, 4b. For example, with first lens system 11a, having the first portion 4a with a narrower first field of view 90 than the second field of view 91 of the second lens system 11b and that overlaps the second portion 4b of the second lens system 11b, a zoom-in function is generated by the narrower first field of view 90 and/or first portion 4a. This provides longer detection range due to the larger possible optical aperture of the first lens system 11a which is possible for a narrower field of view 90 and the same size of the deflection device 6. The wider, second field of view 91 imaging through the second lens system 11b will provide a wide overview of the second portion 4b but less range than the first lens system 11a with its field of view 90. The narrower, first field of view 90 imaging through the first lens system 11a will provide a longer range at a part of the area covered by the second lens system 11b.

In a preferred embodiment, each lens system 11a, 11b can be a complex optical system involving a number of different single lenses, beam splitters, polarizers, filters, diaphragms or other optical components arranged in combination in order to provide a given optical performance. Preferably, each lens system 11a, 11b comprises, or consists of, a lens objective. The first lens system 11a has a first optical axis 31a as the central optical axis of the first lens system 11a. The second lens system 11b has a second optical axis 31b as the central optical axis of the second lens system 11b. The first optical axis 31a differs from the second optical axis 31b.

In the embodiment shown in Figure 2, the lens systems 11a, 11b are arranged side by side in juxtaposition and do not overlap, that is, the lens systems 11a, 11b are arranged in a nonsequential manner with respect to the optical path. In other words, the optical axes 31a, 31b of the lens systems 11a, 11b do not coincide. The lens systems 11a, 11b are preferably embedded in a frame or in separate frames which are adapted to orientate the optical axes 31a, 31b of the lens systems 11a, 11b in a desired direction.

The optical axes 31a, 31b can be tilted with respect to each other so that the first optical axis 31a is different from the second optical axis 31b. In this embodiment, the first optical axis 31a includes an angle with the second optical axis 31b. Also in Figures 4 to 6, the first optical axis 31a is nonparallel to, i.e. tilted, with respect to the second optical axis 31b. The lens systems 11a, 11b can be arranged to achieve a preferred overall field of view of for example 90 degrees, for example, the optical axes 31a, 31b of the lens systems 11a, 11b can be slightly tilted (e.g. <15°), tilted (e.g. 15°-60°), strongly tilted (e.g. 60°-90°) and/or directed into different directions (e.g. >90°), preferably depending on the viewing angle of the lens systems 11a, 11b.

The viewing angle can be different for each of the lens systems 11a, 11b so as to improve the performance. A lens system 11a, 11b with a smaller field of view will have a larger range or need less power for the same range given a specific size of the entrance pupil. The overall field of view and/or scanned surface 4 can be divided in as many fractions and/or scanned surface portions 4a, 4b as desired by a corresponding number of lens systems 11a, 11b. The overall field of view and/or scanned surface 4 can in principle get up to 360° if so desired, given proper arrangements are done. The number of lens systems 11a, 11b is not limited to two and can be increased to meet the respective requirements.

Smaller fractions of the field of view enable larger entrance apertures or lens diameters, which results in better light gathering capabilities, which enable better performance of the vision system 1 due to the availability of a stronger signal. As the overall field of view is divided, each single imaging subsystem 40a, 40b, defined by the lens systems 11a, 11b, needs to cover a fraction smaller than the overall field of view, relaxing the trade-off between the field of view and the range of the vision system 1, related to the aperture of the entrance pupil.

The reflected first light beam 16a transmitted by the first lens system 11a enters the optical unit 22 and/or the receiving unit 26 and is preferably directed along a first detector path 13a towards a prism 14 placed within the optical unit 22 and/or the receiving unit 26, allowing for optical path division and/or light deflection. The reflected second light beam 16b transmitted by the second lens system 11b enters the optical unit 22 and/or the receiving unit 26 and is preferably directed along a second detector path 13b towards the prism 14.

Each of the lens systems 11a, 11b is adapted to focus a reflected light beam 16a, 16b corresponding to any of the lens systems 11a, 11b and to any of the light beams 3a, 3b to a light deflection device 6. The reflected light beams 16a, 16b reflected by the surface 4 are directed towards the light deflection device 6 along detector paths 13a, 13b comprising a plurality of light deflection elements 7. The deflection device 6 is in communication with the data processing device 19. The data processing device 19 is adapted to control the deflection elements 7 of the light deflection device 6.

In this embodiment, the vision system 1 comprises a single light deflection device 6. The light deflection device 6 can comprise a planar basis, e.g., a printed circuit board, a substrate, and/or a wafer, on which an array of light deflection elements 7 is arranged. The array of light deflection elements 7 can for example be one- or two-dimensional, i.e., a linearray or a matrix. The light deflection elements 7 can be controllable by a common controller of the light deflection device 6.

Each light deflection element 7 is adapted to switch its orientation between at least a first orientation and a second orientation allowing the light beam 13a, 13b traveling along the corresponding detector paths 13a, 13b to be deflected in a first deflection direction 9 if the light is incident on a deflection element 7 oriented in the first orientation or in a second deflection direction 17 if the light is incident on a light deflection element 7 oriented in the second orientation. The switch of the orientation of any of the light deflection elements 7 preferably changes its tilt with respect to a rotational axis. The light deflection elements 7 can be adapted to be switchable between two, a plurality of, and/or a continuous band of orientations.

In a preferred embodiment, the light deflection device 6 is a DMD, i.e., a digital micro mirror device on a chip with a plurality of controllable micro mirrors as deflection elements 7. In this embodiment, the at least two orientations of each of the light deflection elements 7 are the orientations of micromirrors that are individually rotatable controlled by electrostatic interactions. Alternatives for the deflection device 6 to the DMD may be other active optical elements, in particular pixelated arrays (such as LCDs or Liquid crystal tunable filters) or even deformable mirrors. In the pixelated arrays, each pixel is a deflection element 7 and in each pixel a crystal can change its orientation to influence light transmission, deflection and/or reflection properties. In LCDs, additional passive or active optical elements, such as additional DMDs, LCDs, and/or deformable mirrors, can be used in the system to obtain better data quality. Active strategies for local image quality improvement using a deformable mirror in the optical path or a LCD device used as a shutter or as a phase modulator can enhance the quality of the data.

Each light deflection element 7 is adapted to redirect light which is incident on said light deflection element 7 from the scanned surface 4, and to redirect light in at least either the first deflection direction 9 corresponding to the first orientation or the second deflection direction 17 corresponding to the second orientation. The difference of the first deflection direction 9 and the second deflection direction 17 of light deflected by a single light deflection element 7 arises from a switch and/or toggle between the different orientations of the light deflection element 7.

In the embodiment shown in Figure 2, incident light on a deflection element 7 oriented in the first orientation is preferably deflected as first light beam portions 18a, 18b via the prism 14 towards the light sensing devices 8a, 8b preferably through lens assemblies 12a, 12b. A first lens assembly 12a is adapted to focus light on the first light sensing device 8a and/or a second lens assembly 12b is adapted to focus light on the second light sensing device 8b. The light sensing devices 8a, 8b are adapted to sense light beam portions 18a, 18b which are redirected from the at least one light deflection device 6 in said first deflection direction 9 and incident on light sensitive surfaces of said light sensing devices 8a, 8b.

In this preferred embodiment, the vision system 1 comprises two LIDAR systems but a single light deflection device 6 that is arranged to direct light towards the light sensing devices 8a, 8b in the first deflection direction 9.

In this embodiment, the vision system 1 comprises the first light sensing device 8a and the second light sensing device 8b which is separate from the first light sensing device 8a. Preferably, the first light sensing device 8a and the second light sensing device 8b are mounted on different printed circuit boards, are based on separate wafers, on different substrates, and/or are separate sensors. That is, the photoelectric active areas of the light sensing device 8a, 8b that are used for data acquisition and light sensing are separated from each other by a distance that is determined by the arrangement of the light sensing devices 8a, 8b. The light sensing devices 8a, 8b may not be identical and/or may be different in their spectral behavior, size, and/or nature, depending on the final purpose of the sensing procedure.

Each of the light sensing devices 8a, 8b has a light sensitive surface on which, for example, a photoelectric active area resides and/or an array of light sensitive pixels is arranged. Preferably, each light sensing device 8a, 8b comprises an array of pixels, e.g., a line array or a pixel matrix. The normal of the light sensitive surface of each light sensing device 8a, 8b defines a direction in which the light sensing capabilities are particularly effective, the quantum efficiency is maximum, and/or towards which the center of the field of view of the light sensing device 8a, 8b is directed.

The normal of the light sensitive surface of the first light sensing device 8a is different from the normal of the light sensitive surface of the second light sensing device 8b, i.e., the first light sensing device 8a faces towards a different direction than the second light sensing device 8b. The light sensing devices 8a, 8b are preferably arranged in conjunction with the lens assemblies 12a, 12b. The normal vectors are not parallel but enclose a non-zero angle according to the constructive properties of the lens assemblies 12a, 12b, the light deflection device 6, and/or the light sensing devices 8a, 8b. Preferably, the lens assemblies 12a, 12b are arranged to focus light redirected in the first deflection direction 9 by a light deflection element 7 oriented in the first orientation to the light sensing devices 8a, 8b.

The lens assemblies 12a, 12b are arranged so that any one of the lens assemblies 12a, 12b has an optical axis that preferably coincides with the normal of the light sensitive surface of the first light sensing device 8a and an optical axis that coincides with the normal of the light sensitive surface of the second light sensing device 8b. Thus, the optical axis of the first lens assembly 12a that focuses light on the first light sensing device 8a is different from the optical axis of the second lens assembly 12b that focuses light on the second light sensing device 8b.

Incident light on a deflection element 7 oriented in the second orientation is in this embodiment deflected in the second deflection direction 17 towards an absorber 30 to reduce light scattering or in an alternative embodiment towards a detecting device.

The detecting device can comprise CCD/CMOS, focal plane arrays or polarimeters, or any other area or line imaging sensor composed thereof. CCD/CMOS images may be RGB or grayscale depending on the embodiment. Polarimetric images can be in a convenient format obtained after sensing and computational analysis, which could be performed in the data processing device 19 and/or a suitable processing device comprised in the detection device. Also, polarization filters can be located in the optical path within the vision system 1, preferably in combination with a laser as light source 2 and/or a polarimeter as detecting device. The detecting device can in particular comprise different sensors to detect different properties, e.g., different polarizations and/or different spectral bands. Also, a detecting device with varying polarizing filters on different areas (pixels) of the detecting device is possible.

Additional optics either for laser spot filtering and/or for optimization of focusing on the detecting device is possible. Electronics comprised in the deflection device 6, the light sensing device 8 and/or the light detecting device could be coordinated or controlled by the data processing device 19. The communication between the light sensing device 8 and the data processing device 19 can also be parallel to the communication between the detecting device and the data processing device 19.

The data processing device 19 can comprise a pre-processor adapted to control the capture of images, time-of-flight measurements, and/or other data by the light sensing device 8 and the detecting device and the control of the deflection device 6, receive the electrical signal containing the information from the light sensing device 8 and the detecting device and from the light deflection device 6. The pre-processor may be realized by a dedicated hardware circuit, for example a Field Programmable Gate Array (FPGA) or an Application Specific Integrated Circuit (ASIC). Alternatively, the pre-processor, or part of its functions, can be realized in the data processing device 19 or a System-On-Chip (SoC) device comprising, for example, FPGA, processing device, ARM and/or microprocessor functionality.

Further image and data processing is carried out by corresponding software in the data processing device 19. The image and data processing in the processing device 19 may for example comprise identifying and preferably also classifying possible objects in the surrounding of the vehicle, such as pedestrians, other vehicles, bicyclists and/or large animals, tracking over time the position of object candidates identified in the captured images, computing depth images based on the time-of-flight values, and activating or controlling at least one driver assistance device 20 for example depending on an estimation performed with respect to a tracked object, for example an estimated collision probability. The driver assistance device 20 may in particular comprise a display device to display information on a possibly detected object and/or on the environment of the vehicle. However, the invention is not limited to a display device. The driver assistance device 20 may in addition or alternatively comprise a warning device adapted to provide a collision warning to the driver by suitable optical, acoustical and/or haptic warning signals; one or more restraint systems such as occupant airbags or safety belt tensioners, pedestrian airbags, hood lifters and the like; and/or dynamic vehicle control systems such as brake or steering control devices.

The data processing device 19 can also be used as input to highly automated, piloted, and/or autonomous driving functions in a vehicle.

The data processing device 19 is preferably a digital device which is programmed or programmable and preferably comprises a microprocessor, micro-controller, digital signal processor (processing device), field programmable gate array (FPGA), or a System-On-Chip (SoC) device, and preferably has access to, or comprises, a memory device. The data processing device 19, pre-processing device and the memory device are preferably realised in an on-board electronic control unit (ECU) and may be connected to other components of the vision system 1 via a separate cable or a vehicle data bus. In another embodiment the ECU and one or more of the vision systems 1 can be integrated into a single unit, where a one box solution including the ECU and all vision systems 1 can be preferred. All steps from data acquisition, imaging, depth estimations, pre-processing, processing to possible activation or control of driver assistance device are performed automatically and continuously during driving in real time.

In a particular application, LIDAR, range-gated images, polarimetric, RGB and/or FPA images are gathered together using electronics, including frame-grabber and the data processing device 19, to have them processed and support the decisionmaking process of the driver assistance device 20.

All parts of the receiving unit 26, in particular the lens systems 11a, 11b, the prism 14, the light sensing devices 8a, 8b and the light deflection device 6 are preferably housed in and/or attached to the same single housing 27. In this embodiment, the light emitting unit 25 and the receiving unit 26 are housed in the same housing 27. It is also possible to arrange the emitting unit 25 and the receiving unit 26 in different housings 27, or that the vision system 1 comprises a plurality of emitting units 25 and/or receiving units 26.

Each lens system 11a, 11b can preferably be linked to at least one shutter. The at least one shutter is adapted to change between a light blocking and a light transmitting state. The at least one shutter can be arranged upstream or downstream the respective lens system 11a, 11b with respect to the optical path. The shutter can be adapted to communicate with the data processing device 19 to be coordinated and/or to provide data or with the light deflection device 6 to advantageously coordinate or being coordinated. For example, if only one shutter corresponding to the first lens system 11a is open while the other shutter corresponding to the second lens system 11b is closed, the only light which is transmitted by the lens systems 11a, 11b is the reflected light beam 16a which stems from the first lens system 11a and corresponds to the first portion 4a, reducing the ambient light sources thus improving the signal to noise ratio (SNR). A sequential opening and closing of the individual shutters allows sequential scanning of the fractions of the overall field of view and/or of the scanned surface potions 4a, 4b, which is called range gated imaging.

Figure 3 shows a preferred embodiment of the vision system 1. To explain the embodiment as shown in Figure 3, reference is made to Figure 2 and the corresponding description. The differences between the embodiments of Figures 2 and 3 are laid out subsequently.

In the embodiment shown in Figure 3, incident light on a deflection element 7 oriented in the first orientation is preferably deflected as a first light beam portions 18a in the first deflection direction 9 via the prism 14 towards the first light sensing device 8a, preferably through the first lens assembly 12a. Incident light on a deflection element 7 oriented in the second orientation is preferably deflected as a second light beam portions 18b in the second deflection direction 17 towards the second light sensing device 8b, preferably through the optional prism 14 and the second lens assembly 12b.

The preferred embodiment of Figure 3 demonstrates that it is also possible that a single scanning device 15 covers the complete scanned surface 4, which is afterwards divided by different lens systems 11a, 11b of the receiving unit 26 in different scanned surface portions 4a, 4b. In other words, it is also possible not to split the scanning of the full scanned surface 4 of the emitting unit 25, so that a single scanning device 15 scans the full scanned surface 4of the emitting unit 25, which afterwards is imaged using separate optical systems and/or lens systems 11a, 11b, wherein each lens systems 11a, 11b covers a part of the field of view, i.e., a scanned surface potion 4a, 4b.In the embodiment of Figure 3, complementary, overlapping or partially overlapping scanned surface portions 4a, 4b are imaged to each of the light sensing devices 8a, 8b.

In this preferred embodiment, the vision system 1 comprises two LIDAR systems but a single light deflection device 6 that is arranged to direct light towards the first light sensing device 8a in the first deflection direction 9 and towards the second light sensing device 8b in the second deflection direction 17.

The light sensing devices 8a, 8b are adapted to sense light beam portions 18a, 18b which are redirected from the at least one light deflection device 6 in said first and second deflection direction 9, 17 and incident on light sensitive surfaces of said light sensing devices 8a, 8b, i.e, the first light sensing devices 8a is adapted to sense the first light beam portion 18a which is redirected from the at least one light deflection device 6 in said first deflection direction 9 and incident on light sensitive surface of said first light sensing devices 8a and the second light sensing devices 8b is adapted to sense the second light beam portion 18b which is redirected from the at least one light deflection device 6 in said second deflection direction 17 and incident on light sensitive surface of said second light sensing devices 8b.

Figures 4 to 6 show the arrangement of a light deflection device 6, two light sensing devices 8a, 8b, and a lens arrangement 11 schematically in different perspectives. Figure 4 is a perspective view, Figure 5 is a plan view, and Figure 6 is an elevation view as viewed from the front in a horizontal. In each of the Figures 4 to 6, two imaging systems 40a, 40b are placed strategically in order to get an overall field of view composed of two individual smaller fields of view 90, 91 of each of the imaging systems 40a, 40b. In this embodiment, the scanned surface 4 comprises a first scanned surface portion 4a of a first imaging system 40a and a second scanned surface portion 4b of a second imaging system 40b. Each of the imaging systems 40a, 40b comprises one of the lens system 11a, 11b that focuses the reflected light beams 16a, 16b along detector paths 13a, 13b on the light deflection device 6. The imaging systems 40a, 40b and/or the lens system 11a, 11b are adapted to converge the reflected light beams 16a, 16b on the same deflection device 6.

The first lens system 11a is arranged to communicate with the first light sensing device 8a via the light deflection device 6. The second lens system 11b is arranged to communicate with the second light sensing device 8b via the light deflection device 6. The first reflected light beam 16a is transmitted by the first lens system 11a and a second reflected light beam portion 16b is transmitted by the second lens system 11b.

The reflected light beams 16a, 16b transmitted by the lens systems 11a, 11b determine the field of view of the imaging systems 40a, 40b. In these examples, two equal imaging systems 40a, 40b with a specific field of view 90, 91each are arranged to partition the overall field of view of 90°. In this example the imaging systems 40a, 40b cover 45° each and the overall field of view covers 90°.

Due to different inclinations of the image systems 40a, 40b, i.e., the optical axes 31a, 31b of the lens systems 11a, 11b enclose a non-zero angle with respect to the normal of the light deflection device 6, the light that is reflected and redirected in the first and/or second deflection direction 9, 17 is directed towards different light sensing devices 8a, 8b. The inclination could for example mean the angle of the optical axis 31a, 31b enclosed with the horizontal, i.e., the azimuthal component of the optical axis 31a, 31b with respect to a horizontal reference plane, or the angle between by the horizontal and the normal of the light deflection device 8.

In this embodiment the optical axes 31a, 31b of the lens systems 11a, 11b intersect at the light deflection device 6 and each of the lens systems 11a, 11b focuses on the light deflection device 6, i.e., the distance between the light deflection device 6 and each of the lens systems 11a, 11b equals the focal length of the corresponding lens system 11a, 11b.

The light sensing devices 8a, 8b are separate photoelectronic modules. Each of the light sensing devices 8a, 8b has a light sensitive surface. Each of the light sensing devices 8a, 8b is preferably arranged so that the normal of its sensitive surface points towards the light deflection device 6. This allows that light deflected from the light deflection device 6 is perpendicularly incident on each of the light sensitive surfaces of the light sensing devices 8a, 8b. It is also possible to arrange mirrors in the optical paths between the light deflection device 6 and the light sensing devices 8a, 8b so that normal of said light sensing devices 8a, 8b do not point towards the light deflection device 6 but preferably towards the mirrors.

The overall field of view and/or scanned surface 4 of the vision system 1 is a combination of, and segmented into, the fractions of the field of view and/or of the scanned surface portions 4a, 4b. That is, the field of view of the target and/or the scanned surface 4 is divided into more than one fraction by lens systems 11a, 11b. Preferably, the lens systems 11a, 11b are adapted to partition the field of view so that the fractions overlap and/or to partition the scanned surface 4 so that portions 4a, 4b overlap. The overlap of the fraction and/or portions 4a, 4b can be small and allows for image matching and/or image fusion preferably by software and/or the data processing device 19. The overlap may be used to automatically reconstruct the full field of view image or for other applications.

Figure 7 shows an embodiment of a vision system 1 with a receiving unit 26 and an emitting unit 25, wherein the vision system 1 uses multiple emitters emitting a plurality of light beams 3a, 3b, one light deflection device 7, and multiple light sensing devices 8a, 8b. Two optical paths are realized by the use of a single light deflection device 7, only. This illustration is a schematic compatible with the embodiments as shown in Figures 4-6.

A light generation part comprises a single light source 2 that generates a light beam 3 and feeds a beam splitter 50 to emit a plurality of light beams 3a, 3b with a first light beam 3a and a second light beam 3b. The emitting unit 25 can comprise any other number of light sources 2 in other embodiments, depending on the constructive properties, the laser power, the field of view, the sampling frequency, and/or the range of the vision system 1.

The light source 2 is adapted to feed the beam splitter 50. In another embodiment more than one light source 2 is used to feed the beam splitter 50. In other embodiments, the beam splitter 50 and/or the light generation part is adapted to generate and emit more than two light beams 3a, 3b.

The light beams 3a, 3b are transmitted by lens arrangements 10a, 10b and preferably widened by optical devices and/or deflected by a scanning device 15a, 15b as shown in Figure 2. The light beams 3a, 3b are preferably directed in different complementary, or at least partially overlapping, scanned surface portions 4a, 4b of the environment 5. Any one of the light beams 2a, 2b is directed in a region of the environment 5 so that potentially reflected light beams 16a, 16b are reflected towards lens systems 11a, 11b.

Preferably, each of the lens systems 11a, 11b is arranged so that it captures reflected light from not more than one light beam 3a, 3b. The lens arrangements 10a, 10b and the lens systems 11a, 11b can comprise coinciding optical devices and/or lenses. The lens arrangements 10a, 10b may be different for different light beams 3a, 3b.

The lens system 11a, 11b focuses the reflected light beams 16a, 16b along detector paths 13a, 13b on the single light deflection device 6 from where the light beam is deflected by light deflection elements 7 in a first orientation as shown in Figure 2 in a first deflection direction 18a, 18b towards separate light sensing devices 8a, 8b.

Each of the light beams in the first and/or second deflection direction 9, 17 falls on any one of the light sensing devices 8a, 8b with an angle *α*, *β* between the first and/or second deflection direction 9, 17 and the light sensitive surface of the light sensing device 8a, 8b. Preferably, the angle *α*, *β* is a predefined value, for example 90°, in order to achieve optimal light sensing efficiency of the light sensing device 8a, 8b. The angles *α* and *β* can be unequal to each other.

As indicated in Figures 2 and 7, the normal of the light sensitive surface of a first light sensing device 8a has a non-zero tilt with respect to the normal of the light sensitive surface of a second light sensing device 8b, i.e., the first light sensing device 8a is tilted with respect to the second light sensing device 8b. The tilt of the light sensing devices 8a, 8b is chosen so that the light sensing devices 8a, 8b are directed towards the light deflection element 6.

The visions system 1 can in an embodiment not shown in the Figure be used with a light deflection device 6 comprising light deflection elements 7 which can be switchable between more than two, and/or a continuous band of orientations. The number of light sensing devices 8a, 8b can in these non-shown embodiments equal the number of imaging modes which can be combined, orientations and/or a number larger than two.

## Claims

1. A vision system (1) for a motor vehicle (100) comprising
- a light beam generation part (2) adapted to generate at least one light beam (3; 3a, 3b) directed to a scanned surface (4) in the environment (5) of the vehicle;
- at least one light deflection device (6) comprising an array of light deflection elements (7), wherein the orientation of each light deflection element (7) is switchable between at least a first orientation and a second orientation, to redirect light which is incident on said light deflection element (7) from the scanned surface (4) in at least a first deflection direction (9) corresponding to the first orientation or a second deflection direction (17) corresponding to the second orientation;
- a plurality of light sensing devices (8a, 8b) adapted to sense light beam portions (18a, 18b) which are redirected from the at least one light deflection device (6) in said first and/or second deflection direction (9, 17) and incident on light sensitive surfaces of said light sensing devices (8a, 8b);
- a plurality of lens systems (11a, 11b) adapted to focus reflected light beams (16a, 16b) from the scanned surface (4) to the light deflection device (6), wherein the first lens system (11a) is arranged to image a first portion (4a) of the scanned surface (4) and the second lens system (11b) is arranged to image a second portion (4b) of the scanned surface (4) that differs from the first scanned surface portion (4a); and
- a data processing device (19);
wherein
- the number of light deflection devices (6) is smaller than the number of light sensing devices (8a, 8b);
- each of the first lens system (11a) and the second lens system (11b) is arranged to focus a corresponding reflected light beam (16a, 16b) from the scanned surface (4) to the light deflection device (6); and wherein
- light beams (13a, 13b) incident on the same light deflection element (7) and corresponding to said reflected light beams (16a, 16b) are directed to different light sensing devices (8a, 8b).

2. The vision system (1) according to claim 1, **characterized in that**
- the first light sensing device (8a) is exposed to light transmitted through the first lens system (11a), and the second light sensing device (8b) is exposed to light transmitted through the second lens system (11b).

3. The vision system (1) according to any one of the preceding claims, **characterized in that**
- the first light sensing device (8a) is protected from light transmitted through the second lens system (11b), and the second light sensing device (8b) is protected from light transmitted through the first lens system (11a) .

4. The vision system (1) according to any one of the preceding claims, **characterized in that**
- each of the light sensing devices (8a, 8b) is exposed to light transmitted through one of the lens systems (11a, 11b), only.

5. The vision system (1) according to any one of the preceding claims, **characterized in that**
- the first lens system (11a), the light deflection device (6), and the first light sensing device (8a) form a first depth imaging system; and the second lens system (11b), the light deflection device (6), and the second light sensing device (8b) form a second depth imaging system different from the first depth imaging system.

6. The vision system (1) according to any one of the preceding claims, **characterized in that**
- the normal of the light sensitive surface of the first light sensing device (8a) is different from the normal of the light sensitive surface of the second light sensing device (8b).

7. The vision system (1) according to any one of the preceding claims, **characterized in that**
- the first optical axis (31a) of the first lens system (11a) and the second optical axis (31b) of the second lens system (11b) intersect at the light deflection device (6).

8. The vision system (1) according to any one of the preceding claims, **characterized in that**
- the number of light deflection devices (6) is one.

9. The vision system (1) according to any one of the preceding claims, **characterized in that**
- the light beam generation part (2) is adapted to emit a plurality of light beams (3a, 3b) into at least two different regions of the environment (5), and
- each of the lens system (11a, 11b) is arranged to focus a reflected light beam (16a, 16b) corresponding to the reflection on the surface (4) of any one of the plurality of light beams (3a, 3b) to the light deflection device (6) .

10. The vision system (1) according to claim 9, **characterized in that**
- any one of the lens systems (11a, 11b) is arranged to focus a reflected light beam (16a, 16b) corresponding to the reflection on the surface (4) of one light beam (3a, 3b), only, to the light deflection device (6).

11. The vision system (1) according to any one of claims 9 or 10, **characterized in that**
- at least two of the plurality of light beams (3a, 3b) are generated by a common light source (2).

12. The vision system (1) according to any one claims 1 to 8, **characterized in that**
- the light beam generation part (2) is adapted to emit a single light beam (3) into the environment (5) to cover the whole field of view of the vision system (1) to be imaged through two separate lens systems (11a, 11b).

13. A vision method for a motor vehicle (100) comprising
- generating at least one light beam (3, 3a, 3b) directed to a scanned surface (4) in the environment (5) of the vehicle;
- redirecting reflected light from the scanned surface (4) in at least a first deflection direction (9) corresponding to the first orientation of a switchable light deflection element (7) comprised by a light deflection device (6) or a second deflection direction (17) corresponding to the second orientation of said switchable light deflection element (7);
- sensing light beam portions (18a, 18b) which are redirected in said first and/or second deflection directions (9, 17) and incident on light sensitive surfaces of light sensing devices (8a, 8b);
- focusing reflected light beams (16a, 16b) from the scanned surface (4) to the light deflection device (6), wherein a first lens system (11a) focuses reflected light (16a) corresponding to said first light beam (3a) and a second lens system (11b) focuses reflected light (16b) corresponding to said second light beam (3b), wherein the first lens system (11a) images a first portion (4a) of the scanned surface (4) and the second lens system (11b) images a second portion (4b) of the scanned surface (4) that differs from the first scanned surface portion (4a);
- focusing a corresponding reflected light beam (16a, 16b) from the scanned surface (4) to the light deflection device (6); wherein
- light beams (13a, 13b) incident on the same light deflection element (7) and corresponding to said reflected light beams (16a, 16b) are directed to different light sensing devices (8a, 8b).

## Patentansprüche

1. Ein Sichtsystem (1) für ein Kraftfahrzeug (100), umfassend
- ein Lichtstrahlerzeugungsteil (2), das dazu eingerichtet ist, mindestens einen auf eine gescannte Oberfläche (4) in der Umgebung (5) des Fahrzeugs gerichteten Lichtstrahl (3; 3a, 3b) zu erzeugen;
- mindestens eine Lichtablenkungsvorrichtung (6), die eine Anordnung von Lichtablenkungselementen (7) umfasst, wobei die Ausrichtung jedes Lichtablenkungselements (7) zwischen mindestens einer ersten Ausrichtung und einer zweiten Ausrichtung schaltbar ist, um Licht, das von der gescannten Oberfläche (4) auf das Lichtablenkungselement (7) einfällt, in mindestens eine erste Ablenkungsrichtung (9) entsprechend der ersten Ausrichtung oder eine zweite Ablenkungsrichtung (17) entsprechend der zweiten Ausrichtung umzulenken;
- eine Mehrzahl von Lichtsensorvorrichtungen (8a, 8b), die dazu eingerichtet sind, Lichtstrahlabschnitte (18a, 18b) zu erfassen, die von der mindestens einen Lichtablenkungsvorrichtung (6) in der ersten und/oder zweiten Ablenkungsrichtung (9, 17) umgelenkt werden und auf lichtempfindliche Oberflächen der Lichtsensorvorrichtungen (8a, 8b) einfallen;
- eine Vielzahl von Linsensystemen (11a, 11b), die dazu eingerichtet sind, reflektierte Lichtstrahlen (16a, 16b) von der gescannten Oberfläche (4) auf die Lichtablenkungsvorrichtung (6) zu fokussieren, wobei das erste Linsensystem (11a) so angeordnet ist, dass es einen ersten Abschnitt (4a) der gescannten Oberfläche (4) abbildet, und das zweite Linsensystem (11b) so angeordnet ist, dass es einen zweiten Abschnitt (4b) der gescannten Oberfläche (4) abbildet, der sich von dem ersten gescannten Oberflächenabschnitt (4a) unterscheidet; und
- eine Datenverarbeitungsvorrichtung (19);
- die Anzahl der Lichtablenkungsvorrichtungen (6) kleiner ist als die Anzahl der Lichtsensorvorrichtungen (8a, 8b);
- jedes erste Linsensystem (11a) und jedes zweite Linsensystem (11b) angeordnet ist, um einen entsprechenden reflektierten Lichtstrahl (16a, 16b) von der gescannten Oberfläche (4) auf die Lichtablenkungsvorrichtung (6) zu fokussieren; und wobei
- Lichtstrahlen (13a, 13b), die auf dasselbe Lichtablenkungselement (7) einfallen und den reflektierten Lichtstrahlen (16a, 16b) entsprechen, auf verschiedene Lichtsensorvorrichtungen (8a, 8b) gerichtet werden.

2. Das Sichtsystem (1) nach Anspruch 1, **dadurch gekennzeichnet, dass**
- die erste Lichtsensorvorrichtung (8a) dem durch das erste Linsensystem (11a) übertragenen Licht ausgesetzt ist, und die zweite Lichtsensorvorrichtung (8b) dem durch das zweite Linsensystem (11b) übertragenen Licht ausgesetzt ist.

3. Das Sichtsystem (1) nach einem der vorhergehenden Ansprüche, **dadurch gekennzeichnet, dass**
- die erste Lichtsensorvorrichtung (8a) vor Licht geschützt ist, das durch das zweite Linsensystem (11b) übertragen wird, und die zweite Lichtsensorvorrichtung (8b) vor Licht geschützt ist, das durch das erste Linsensystem (11a) übertragen wird.

4. Das Sichtsystem (1) nach einem der vorhergehenden Ansprüche, **dadurch gekennzeichnet, dass**
- jede der Lichtsensorvorrichtungen (8a, 8b) nur dem durch eines der Linsensysteme (11a, 11b) übertragenen Licht ausgesetzt ist.

5. Das Sichtsystem (1) nach einem der vorhergehenden Ansprüche, **dadurch gekennzeichnet, dass**
- das erste Linsensystem (11a), die Lichtablenkungsvorrichtung (6) und die erste Lichtsensorvorrichtung (8a) ein erstes Tiefenbildgebungssystem bilden; und das zweite Linsensystem (11b), die Lichtablenkungsvorrichtung (6) und die zweite Lichtsensorvorrichtung (8b) ein zweites Tiefenbildgebungssystem bilden, das von dem ersten Tiefenbildgebungssystem verschieden ist.

6. Das Sichtsystem (1) nach einem der vorhergehenden Ansprüche, **dadurch gekennzeichnet, dass**
- die Normale der lichtempfindlichen Oberfläche der ersten Lichtsensorvorrichtung (8a) von der Normalen der lichtempfindlichen Oberfläche der zweiten Lichtsensorvorrichtung (8b) verschieden ist.

7. Das Sichtsystem (1) nach einem der vorhergehenden Ansprüche, **dadurch gekennzeichnet, dass**
- die erste optische Achse (31a) des ersten Linsensystems (11a) und die zweite optische Achse (31b) des zweiten Linsensystems (11b) sich an der Lichtablenkungsvorrichtung (6) schneiden.

8. Das Sichtsystem (1) nach einem der vorhergehenden Ansprüche, **dadurch gekennzeichnet, dass**
- die Anzahl der Lichtablenkungsvorrichtungen (6) eins ist.

9. Das Sichtsystem (1) nach einem der vorangehenden Ansprüche, **dadurch gekennzeichnet, dass**
- das Lichtstrahlerzeugungsteil (2) dazu eingerichtet ist, eine Mehrzahl von Lichtstrahlen (3a, 3b) in mindestens zwei unterschiedliche Bereiche der Umgebung (5) zu emittieren, und
- jedes der Linsensysteme (11a, 11b) dazu eingerichtet ist, einen reflektierten Lichtstrahl (16a, 16b) entsprechend der Reflexion an der Oberfläche (4) eines beliebigen der Mehrzahl von Lichtstrahlen (3a, 3b) auf die Lichtablenkungsvorrichtung (6) zu fokussieren.

10. Das Sichtsystem (1) nach Anspruch 9, **dadurch gekennzeichnet, dass**
- eines der Linsensysteme (11a, 11b) dazu eingerichtet ist, dass es einen reflektierten Lichtstrahl (16a, 16b), der der Reflexion an der Oberfläche (4) nur eines Lichtstrahls (3a, 3b) entspricht, auf die Lichtablenkungsvorrichtung (6) fokussiert.

11. Das Sichtsystem (1) nach einem der Ansprüche 9 oder 10,
**dadurch gekennzeichnet, dass**
- mindestens zwei der Mehrzahl von Lichtstrahlen (3a, 3b) von einer gemeinsamen Lichtquelle (2) erzeugt werden.

12. Das Sichtsystem (1) nach einem der Ansprüche 1 bis 8,
**dadurch gekennzeichnet, dass**
- das Lichtstrahlerzeugungsteil (2) dazu eingerichtet ist, einen einzigen Lichtstrahl (3) in die Umgebung (5) zu emittieren, um das gesamte Sichtfeld des Sichtsystems (1) abzudecken, das durch zwei separate Linsensysteme (11a, 11b) abgebildet werden soll.

13. Ein Sichtverfahren für ein Kraftfahrzeug (100), umfassend
- Erzeugen mindestens eines Lichtstrahls (3, 3a, 3b), der auf eine gescannte Oberfläche (4) in der Umgebung (5) des Fahrzeugs gerichtet ist;
- Umlenken des von der gescannten Oberfläche (4) reflektierten Lichts in mindestens eine erste Ablenkungsrichtung (9), die der ersten Ausrichtung eines schaltbaren Lichtablenkungselements (7) entspricht, das von einer Lichtablenkungsvorrichtung (6) umfasst ist, oder eine zweite Ablenkungsrichtung (17), die der zweiten Ausrichtung des schaltbaren Lichtablenkungselements (7) entspricht;
- Erfassen von Lichtstrahlabschnitten (18a, 18b), die in die erste und/oder zweite Ablenkungsrichtung (9, 17) umgelenkt werden und auf lichtempfindliche Oberflächen von Lichtsensorvorrichtungen (8a, 8b) einfallen;
- Fokussieren von reflektierten Lichtstrahlen (16a, 16b) von der gescannten Oberfläche (4) auf die Lichtablenkungsvorrichtung (6), wobei ein erstes Linsensystem (11a) reflektiertes Licht (16a) entsprechend dem ersten Lichtstrahl (3a) fokussiert und ein zweites Linsensystem (11b) reflektiertes Licht (16b) entsprechend dem zweiten Lichtstrahl (3b) fokussiert, wobei das erste Linsensystem (11a) einen ersten Abschnitt (4a) der gescannten Oberfläche (4) abbildet und das zweite Linsensystem (11b) einen zweiten Abschnitt (4b) der gescannten Oberfläche (4) abbildet, der sich von dem ersten gescannten Oberflächenabschnitt (4a) unterscheidet;
- Fokussieren eines entsprechenden von der gescannten Oberfläche (4) reflektierten Lichtstrahls (16a, 16b) auf die Lichtablenkungsvorrichtung (6); wobei
- Lichtstrahlen (13a, 13b), die auf dasselbe Lichtablenkungselement (7) einfallen und den reflektierten Lichtstrahlen (16a, 16b) entsprechen, auf verschiedene Lichtsensorvorrichtungen (8a, 8b) gerichtet werden.

## Revendications

1. Un système de vision (1) pour un véhicule à moteur (100) comprenant
- une partie de génération de faisceau lumineux (2) conçue pour générer au moins un faisceau lumineux (3 ; 3a, 3b) dirigé vers une surface balayée (4) dans l'environnement (5) du véhicule ;
- au moins un dispositif de déviation de lumière (6) comprenant une série d'éléments de déviation de lumière (7), l'orientation de chaque élément de déviation de lumière (7) pouvant être permutée entre au moins une première orientation et une seconde orientation, pour rediriger de la lumière qui est incidente sur ledit élément de déviation de lumière (7) depuis la surface balayée (4) dans au moins une première direction de déviation (9) correspondant à la première orientation ou une seconde direction de déviation (17) correspondant à la seconde orientation ;
- une pluralité de dispositifs de détection de lumière (8a, 8b) conçus pour détecter des parties de faisceau lumineux (18a, 18b) qui sont redirigées à partir de l'au moins un dispositif de déviation de lumière (6) dans ladite première et/ou seconde direction de déviation (9, 17) et qui sont incidentes sur des surfaces sensibles à la lumière desdits dispositifs de détection de lumière (8a, 8b) ;
- une pluralité de systèmes de lentille (11a, 11b) conçus pour focaliser les faisceaux lumineux (16a, 16b) réfléchis provenant de la surface balayée (4) vers le dispositif de déviation de lumière (6), le premier système de lentille (11a) étant agencé pour reproduire une première partie (4a) de la surface balayée (4) et le second système de lentille (11b) étant agencé pour reproduire une seconde partie (4b) de la surface balayée (4) qui diffère de la première partie de surface balayée (4a) ; et
- un dispositif de traitement de données (19) ;
dans lequel
- le nombre de dispositifs de déviation de lumière (6) est inférieur au nombre de dispositifs de détection de lumière (8a, 8b) ;
- chacun du premier système de lentille (11a) et du second système de lentille (11b) est agencé pour focaliser un faisceau lumineux (16a, 16b) réfléchi correspondant provenant de la surface balayée (4) vers le dispositif de déviation de lumière (6) ; et dans lequel
- des faisceaux lumineux (13a, 13b) incidents sur le même élément de déviation de lumière (7) et correspondant auxdits faisceaux lumineux (16a, 16b) réfléchis sont dirigés vers différents dispositifs de détection de lumière (8a, 8b).

2. Le système de vision (1) selon la revendication 1, **caractérisé en ce**
- **que** le premier dispositif de détection de lumière (8a) est exposé à de la lumière transmise à travers le premier système de lentille (11a) et le second dispositif de détection de lumière (8b) est exposé à de la lumière transmise à travers le second système de lentille (11b).

3. Le système de vision (1) selon l'une quelconque des revendications précédentes, **caractérisé en ce**
- **que** le premier dispositif de détection de lumière (8a) est protégé de la lumière transmise à travers le second système de lentille (11b) et le second dispositif de détection de lumière (8b) est protégé de la lumière transmise à travers le premier système de lentille (11a).

4. Le système de vision (1) selon l'une quelconque des revendications précédentes, **caractérisé en ce**
- **que** chacun des dispositifs de détection de lumière (8a, 8b) est exposé à de la lumière transmise uniquement à travers un des systèmes de lentille (11a, 11b).

5. Le système de vision (1) selon l'une quelconque des revendications précédentes, **caractérisé en ce**
- **que** le premier système de lentille (11a), le dispositif de déviation de lumière (6) et le premier dispositif de détection de lumière (8a) forment un premier système d'imagerie de profondeur ; et le second système de lentille (11b), le dispositif de déviation de lumière (6) et le second dispositif de détection de lumière (8b) forment un second système d'imagerie de profondeur différent du premier système d'imagerie de profondeur.

6. Le système de vision (1) selon l'une quelconque des revendications précédentes, **caractérisé en ce**
- **que** la perpendiculaire à la surface sensible à la lumière du premier dispositif de détection de lumière (8a) est différente de la perpendiculaire à la surface sensible à la lumière du second dispositif de détection de lumière (8b).

7. Le système de vision (1) selon l'une quelconque des revendications précédentes, **caractérisé en ce**
- **que** le premier axe optique (31a) du premier système de lentille (11a) et le second axe optique (31b) du second système de lentille (11b) s'intersectent au niveau du dispositif de déviation de lumière (6).

8. Le système de vision (1) selon l'une quelconque des revendications précédentes, **caractérisé en ce**
- **que** le nombre de dispositifs de déviation de lumière (6) est de un.

9. Le système de vision (1) selon l'une quelconque des revendications précédentes, **caractérisé en ce**
- **que** la partie de génération de faisceau lumineux (2) est conçue pour émettre une pluralité de faisceaux lumineux (3a, 3b) dans au moins deux différentes zones de l'environnement (5), et
- **que** chacun des systèmes de lentille (11a, 11b) est agencé pour focaliser un faisceau lumineux (16a, 16b) réfléchi correspondant à la réflexion sur la surface (4) de n'importe lequel de la pluralité de faisceaux lumineux (3a, 3b) vers le dispositif de déviation de lumière (6).

10. Le système de vision (1) selon la revendication 9, **caractérisé en ce**
- **que** n'importe lequel des systèmes de lentille (11a, 11b) est agencé pour focaliser un faisceau lumineux (16a, 16b) réfléchi correspondant à la réflexion sur la surface (4) d'un faisceaux lumineux (3a, 3b) uniquement, vers le dispositif de déviation de lumière (6).

11. Le système de vision (1) selon l'une quelconque des revendications 9 ou 10, **caractérisé en ce**
- **qu'**au moins deux de la pluralité de faisceaux lumineux (3a, 3b) sont générés par une source de lumière (2) commune.

12. Le système de vision (1) selon l'une quelconque des revendications 1 à 8, **caractérisé en ce**
- **que** la partie de génération de faisceau lumineux (2) est conçue pour émettre un unique faisceau lumineux (3) dans l'environnement (5) pour couvrir tout le champ de vue du système de vision (1) à reproduire par deux systèmes de lentille (11a, 11b) séparés.

13. Un procédé de vision pour un véhicule à moteur (100) comprenant
- la génération d'au moins un faisceau lumineux (3, 3a, 3b) dirigé vers une surface balayée (4) dans l'environnement (5) du véhicule ;
- la redirection de la lumière réfléchie depuis la surface balayée (4) dans au moins une première direction de déviation (9) correspondant à la première orientation d'un élément de déviation de lumière (7) permutable faisant partie d'un dispositif de déviation de lumière (6) ou une seconde direction de déviation (17) correspondant à la seconde orientation dudit élément de déviation de lumière (7) permutable ;
- la détection de parties de faisceau lumineux (18a, 18b) qui sont redirigées dans ladite première et/ou seconde direction de déviation (9, 17) et qui sont incidentes sur des surfaces sensibles à la lumière de dispositifs de détection de lumière (8a, 8b) ;
- la focalisation de faisceaux lumineux (16a, 16b) réfléchis provenant de la surface balayée (4) vers le dispositif de déviation de lumière (6), un premier système de lentille (11a) focalisant la lumière réfléchie (16a) correspondant audit premier faisceau lumineux (3a) et un second système de lentille (11b) focalisant la lumière réfléchie (16b) correspondant audit second faisceau lumineux (3b), le premier système de lentille (11a) reproduisant une première partie (4a) de la surface balayée (4) et le second système de lentille (11b) reproduisant une seconde partie (4b) de la surface balayée (4) qui diffère de la première partie (4a) de surface balayée ;
- la focalisation d'un faisceau lumineux (16a, 16b) réfléchi correspondant provenant de la surface balayée (4) vers le dispositif de déviation de lumière (6) ; dans lequel
- des faisceaux lumineux (13a, 13b) incidents sur le même élément de déviation de lumière (7) et correspondant auxdits faisceaux lumineux (16a, 16b) réfléchis sont dirigés vers différents dispositifs de détection de lumière (8a, 8b).
